# EUROPEAN PATENT APPLICATION

(11) **EP 4 768 534 A1**
(43) Date of publication of application: **01.07.2026**
(21) Application number: 25224845.5
(22) Date of filing: 18.12.2025
(51) Int. Cl.: C08L 9/00, C08L 7/00, B60C 1/00, C08K 3/04, C08K 5/18, C08L 9/06, C08K 3/06, C08K 5/47, C08L 45/00

(54) **RUBBER COMPOSITION FOR TIRE SIDEWALLS, RUBBER COMPOSITION FOR TIRE TREADS, AND PNEUMATIC TIRE**

(30) Priority: 25.12.2024 JP 2024229102; 25.12.2024 JP 2024229128
(71) Applicant: Toyo Tire Corporation, Itami-shi, Hyogo 664-0847 (JP)
(72) Inventor: SAIKI, Akira, ITAMI-SHI, HYOGO 664-0847 (JP)
(74) Representative: Cabinet Beau de Loménie

(57) **Abstract**

A rubber composition for tire sidewalls or rubber composition for tire treads comprising a diene-based rubber, a filler, a vulcanizing agent, an antiaging agent, and a graphene powder, wherein
the antiaging agent contains at least an amine-ketone-based antiaging agent and N-(1,3-dimethylbutyl)-N'-phenyl-p-phenylenediamine, and
when a content of N-(1,3-dimethylbutyl)-N'-phenyl-p-phenylenediamine and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied.

## Description

### BACKGROUND OF THE INVENTION

### Field of the Invention

The present invention relates to a rubber composition for tire sidewalls, a rubber composition for tire treads, and a pneumatic tire.

### Description of the Related Art

A side surface portion of a pneumatic tire is referred to as a tire sidewall, and from the viewpoint of improving durability during running of the tire, it is essential to improve fracture characteristics (tensile strength) of a rubber part (vulcanized rubber) constituting the tire sidewall. However, since the tire sidewall is always exposed to the atmosphere, an antiaging agent is generally added in the rubber composition for tire sidewalls as a raw material from the viewpoint of preventing aging caused by ultraviolet rays, heat, and the like.

In addition, the surface portion of the pneumatic tire is referred to as a tire tread, and from the viewpoint of improving durability, it is essential to improve abrasion resistance during running of the tire. However, since the tire tread is always exposed to the atmosphere, an antiaging agent is generally added in the rubber composition for tire treads as a raw material from the viewpoint of preventing aging caused by ultraviolet rays, heat, and the like.

Patent Document 1 below describes a rubber composition containing a diene-based rubber, graphene oxide, and carbon black, in which a content of the graphene oxide is 0.1 to 10 parts by mass and a content of the carbon black is 30 to 80 parts by mass per 100 parts by mass of the diene-based rubber, and an oxygen content of the graphene oxide is 45 to 60 atom%.

Patent Document 2 below describes a rubber composition containing a rubber component, an sp² type carbon material, and a metal oxide, in which the sp² type carbon material is one or more selected from the group consisting of graphite, graphene, fullerene, and carbon nanohorn.

Patent Document 3 below describes a method for producing a composite material including a step of preparing a first material containing a turbostratic graphene, a step of preparing a second material containing rubber, a step of mixing the first material and the second material, and a step of producing a turbostratic graphene rubber composite material.

### Prior Art Document

### Patent Documents

Patent Document 1: JP-B2-7385429
Patent Document 2: JP-A-2015-143298
Patent Document 3: JP-A-2024-504244

### SUMMARY OF THE INVENTION

As an antiaging agent, N-(1,3-dimethylbutyl)-N'-phenyl-p-phenylenediamine (hereinafter also referred to as "6PPD") is known, and has been often used as a general agent in the rubber industry. For example, when 6PPD is blended for tire sidewall applications, 6PPD reacts with ozone to become 6PPD-quinone. However, since 6PPD-quinone is toxic, it is the actual circumstances the amount of 6PPD used is desired to be reduced as much as possible in reality. In the technique described in Patent Documents 1 to 3, graphene is added in a rubber composition, but as a result of intensive studies by the present inventor, it has been found that there is room for further improvement from the viewpoint of improving the fracture characteristics of a finally obtained vulcanized rubber while reducing the amount of 6PPD used in the rubber composition. Furthermore, in the technique described in Patent Documents 1 to 3, graphene is added in a rubber composition, but as a result of intensive studies by the present inventor, it has been found that there is room for further improvement from the viewpoint of improving the abrasion resistance of a finally obtained vulcanized rubber while reducing the amount of 6PPD used in the rubber composition.

In view of the above circumstances, it is an object of the present invention to provide a rubber composition for tire sidewalls capable of improving the fracture characteristics of a finally obtained vulcanized rubber while reducing the content of N-(1,3-dimethylbutyl)-N'-phenyl-p-phenylenediamine as an antiaging agent, and a pneumatic tire including the vulcanized rubber of the rubber composition for tire sidewalls at least in a sidewall portion.

Further, an object of the present invention is to provide a rubber composition for tire treads capable of improving the abrasion resistance of a finally obtained vulcanized rubber while reducing the content of N-(1,3-dimethylbutyl)-N'-phenyl-p-phenylenediamine as an antiaging agent, and a pneumatic tire including the vulcanized rubber of the rubber composition for tire treads at least in a tread portion.

The above object can be achieved by the following configurations. That is, the present invention relates to a rubber composition (1) for tire sidewalls comprising a diene-based rubber, a filler, a vulcanizing agent, an antiaging agent, and a graphene powder, wherein
the antiaging agent contains at least an amine-ketone-based antiaging agent and N-(1,3-dimethylbutyl)-N'-phenyl-p-phenylenediamine, and
when a content of N-(1,3-dimethylbutyl)-N'-phenyl-p-phenylenediamine and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied.

In the rubber composition (1) for tire sidewalls, a rubber composition (2) for tire sidewalls in which the diene-based rubber is at least one selected from the group consisting of natural rubber, isoprene rubber, styrene-butadiene-based rubber, and butadiene-based rubber is preferred.

In the rubber composition (1) or (2) for tire sidewalls, a rubber composition (3) for tire sidewalls in which the filler is carbon black having an iodine adsorption of 75 to 100 g/kg and a DBP absorption of 95 to 130 cm³/100 g is preferred.

In any one of the rubber compositions (1) to (3) for tire sidewalls, a rubber composition (4) for tire sidewalls in which the vulcanizing agent contains at least sulfur and a sulfenamide-based vulcanization accelerator, and a content of sulfur is higher than that of the sulfenamide-based vulcanization accelerator is preferred.

In any one of the rubber compositions (1) to (4) for tire sidewalls, a rubber composition (5) for tire sidewalls in which the amine-ketone-based antiaging agent is a 2,2,4-trimethyl-1,2-dihydroquinoline polymer is preferred.

The present invention also relates to a pneumatic tire (6) comprising a vulcanized rubber of any one of the rubber compositions (1) to (5) for tire sidewalls in at least a sidewall portion.

The above object can also be achieved by the following configurations. That is, the present invention relates to a rubber composition (7) for tire treads comprising a diene-based rubber, a filler, a vulcanizing agent, an antiaging agent, and a graphene powder, wherein
the antiaging agent contains at least an amine-ketone-based antiaging agent and N-(1,3-dimethylbutyl)-N'-phenyl-p-phenylenediamine, and
when a content of N-(1,3-dimethylbutyl)-N'-phenyl-p-phenylenediamine and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied.

In the rubber composition (7) for tire treads, a rubber composition (8) for tire treads in which the diene-based rubber is at least one selected from the group consisting of natural rubber, isoprene rubber, styrene-butadiene-based rubber, and butadiene-based rubber is preferred.

In the rubber composition (7) or (8) for tire treads, a rubber composition (9) for tire treads in which the filler is carbon black having an iodine adsorption of 105 to 135 g/kg and a DBP absorption of 115 to 135 cm³/100 g is preferred.

In any one of the rubber compositions (7) to (9) for tire treads, a rubber composition (10) for tire treads in which the vulcanizing agent contains at least sulfur, a sulfenamide-based vulcanization accelerator and a guanidine-based vulcanization accelerator, and a content of sulfur is higher than that of a total amount of the sulfenamide-based vulcanization accelerator and the guanidine-based vulcanization accelerator is preferred.

In any one of the rubber compositions (7) to (10) for tire treads, a rubber composition (11) for tire treads in which the amine-ketone-based antiaging agent is a 2,2,4-trimethyl-1,2-dihydroquinoline polymer is preferred.

The present invention also relates to a pneumatic tire (12) comprising a vulcanized rubber of any one of the rubber compositions (7) to (11) for tire treads in at least a tread portion.

The present invention also relates to a pneumatic tire (13) comprising a vulcanized rubber of any one of the rubber compositions (7) to (11) for tire treads in at least a surface of a tread portion.

N-(1,3-Dimethylbutyl)-N'-phenyl-p-phenylenediamine (6PPD) can impart a high antiaging effect to a vulcanized rubber, but it is as described above that the amount of 6PPD used should be reduced as much as possible since 6PPD-quinone is formed by ozone exposure particularly when the vulcanized rubber is used for tire sidewall applications. As a result of intensive studies, the present inventor has found that it is designed so that when the contents of 6PPD and graphene powder are optimized in the presence of an amine-ketone-based antiaging agent, specifically, when a content of 6PPD and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied, whereby it is possible to improve the fracture characteristics (tensile strength) of the finally obtained vulcanized rubber while reducing the content of 6PPD. The reason why such an effect is exhibited is not clear, but the following reasons can be considered.

When the graphene powder is kneaded in the diene-based rubber, the graphene powder is easily aggregated and hardly dispersed. On the other hand, 6PPD has a melting point of 46 to 50°C, and is considered to be liquid at the time of kneading the rubber composition. Therefore, in the case of kneading the rubber composition, when the total amount of the graphene powder and 6PPD is set within a desired range and is designed to have a desired ratio, the graphene powder tends to be uniformly dispersed due to the liquid effect of 6PPD. As a result, it is presumed that the reinforcing effect of the graphene powder is effectively exhibited while the content of 6PPD is reduced, whereby the fracture characteristics (tensile strength) of the finally obtained vulcanized rubber can be improved.

The vulcanized rubber of the rubber composition according to the present invention can improve the fracture characteristics (tensile strength) of the finally obtained vulcanized rubber while reducing the content of 6PPD. Therefore, the vulcanized rubber of the rubber composition according to the present invention is particularly useful for a sidewall portion of a pneumatic tire requiring durability.

N-(1,3-Dimethylbutyl)-N'-phenyl-p-phenylenediamine (6PPD) can impart a high antiaging effect to a vulcanized rubber, but it is as described above that the amount of 6PPD used should be reduced as much as possible since 6PPD-quinone is formed by ozone exposure particularly when the vulcanized rubber is used for tire treads applications. As a result of intensive studies, the present inventor has found that it is designed so that when the contents of 6PPD and graphene powder are optimized in the presence of an amine-ketone-based antiaging agent, specifically, when a content of 6PPD and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied, whereby it is possible to improve the abrasion resistance of the finally obtained vulcanized rubber while reducing the content of 6PPD. The reason why such an effect is exhibited is not clear, but the following reasons can be considered.

When the graphene powder is kneaded in the diene-based rubber, the graphene powder is easily aggregated and hardly dispersed. On the other hand, 6PPD has a melting point of 46 to 50°C, and is considered to be liquid at the time of kneading the rubber composition. Therefore, in the case of kneading the rubber composition, when the total amount of the graphene powder and 6PPD is set within a desired range and is designed to have a desired ratio, the graphene powder tends to be uniformly dispersed due to the liquid effect of 6PPD. As a result, it is presumed that the reinforcing effect of the graphene powder is effectively exhibited while the content of 6PPD is reduced, whereby the abrasion resistance of the finally obtained vulcanized rubber can be improved.

The vulcanized rubber of the rubber composition according to the present invention can improve the abrasion resistance of the finally obtained vulcanized rubber while reducing the content of 6PPD. Therefore, the vulcanized rubber of the rubber composition according to the present invention is particularly useful for a tread portion of a pneumatic tire requiring durability.

### DETAILED DESCRIPTION OF THE PREFERRED EMBODIMENTS

The rubber composition for tire sidewalls according to the first embodiment of the present invention contains a diene-based rubber, a filler, a vulcanizing agent, an antiaging agent, and a graphene powder.

The rubber composition according to the first embodiment of the present invention contains a diene-based rubber. Examples of the diene-based rubber include, but are not limited to, natural rubber (NR), isoprene rubber (IR), butadiene-based rubber (BR), styrene-butadiene-based rubber (SBR), acrylonitrile-butadiene-based rubber (NBR), chloroprene rubber (CR), a styrene-isoprene copolymer rubber, a butadiene-isoprene copolymer rubber, and a styrene-isoprene-butadiene copolymer rubber. These diene-based rubbers may be used singly or in combination of two or more of them. From the viewpoint of solving the problems, in the rubber composition for tire sidewalls according to the first embodiment of the present invention, the diene-based rubber is preferably at least one selected from the group consisting of natural rubber, isoprene rubber, styrene-butadiene-based rubber, and butadiene-based rubber.

As the filler, for example, carbon black or silica may be contained.

Examples of the carbon black that can be used include carbon blacks usually used in the rubber industry, such as SAF, ISAF, HAF, FEF, and GPF; and conductive carbon blacks such as acetylene black and ketjen black. From the viewpoint of solving the problems, the rubber composition for tire sidewalls according to the first embodiment of the present invention preferably contains, as a filler, carbon black having an iodine adsorption of 75 to 100 g/kg and a DBP absorption of 95 to 130 cm³/100 g. The content of the carbon black in the rubber composition for tire sidewalls according to the first embodiment of the present invention is preferably 5 to 80 parts by mass when a total amount of the diene-based rubber is taken as 100 parts by mass.

Examples of the silica to be used include silicas usually used for rubber reinforcement, such as wet silica, dry silica, sol-gel silica, and surface-treated silica. Among these, wet silica is preferred. The content of the silica in the rubber composition for tire sidewalls according to the first embodiment of the present invention is preferably 1 to 50 parts by mass when the total amount of the diene-based rubber is taken as 100 parts by mass.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Evonik Japan Co., Ltd.), bis(3-triethoxysilylpropyl)disulfide (e.g., "Si75" manufactured by Evonik Japan Co., Ltd.), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane. The content of the silane coupling agent is preferably 2 to 20 mass% when a total amount of silica is taken as 100 mass%.

As the vulcanizing agent, sulfur and a vulcanization accelerator can be suitably used.

The sulfur may be ordinary sulfur for rubber, and sulfur such as powdered sulfur, precipitated sulfur, insoluble sulfur, or highly dispersible sulfur can be used. The content of sulfur in the rubber composition for tire sidewalls according to the first embodiment of the present invention is preferably 0.1 to 10 parts by mass when the total amount of the diene-based rubber is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination. However, from the viewpoint of solving the problems, the rubber composition for tire sidewalls according to the first embodiment of the present invention preferably contains a sulfenamide-based vulcanization accelerator as the vulcanization accelerator. The content of the vulcanization accelerator, more preferably the sulfenamide-based vulcanization accelerator, in the rubber composition for tire sidewalls according to the first embodiment of the present invention is preferably 0.1 to 5 parts by mass when the total amount of the diene-based rubber is taken as 100 parts by mass.

From the viewpoint of solving the problems, the rubber composition for tire sidewalls according to the first embodiment of the present invention contains at least sulfur and a sulfenamide-based vulcanization accelerator as the vulcanizing agents, and the content of sulfur is preferably larger than that of the sulfenamide-based vulcanization accelerator, and the content of sulfur is more preferably twice or more the content of the vulcanization accelerator. In addition, the content of sulfur is preferably four times or less and more preferably three times or less the content of the vulcanization accelerator.

Examples of the antiaging agent include an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, which are usually used for rubbers. However, the rubber composition for tire sidewalls according to the first embodiment of the present invention contains at least an amine-ketone-based antiaging agent and 6PPD as the antiaging agents. Examples of the amine-ketone-based antiaging agent include a 2,2,4-trimethyl-1,2-dihydroquinoline polymer, 6-ethoxy-1,2-dihydro-2,2,4-trimethylquinoline, and a reaction product of diphenylamine and acetone, and a 2,2,4-trimethyl-1,2-dihydroquinoline polymer is particularly preferable. The content of the amine-ketone-based antiaging agent, more preferably the 2,2,4-trimethyl-1,2-dihydroquinoline polymer, in the rubber composition for tire sidewalls according to the first embodiment of the present invention is preferably 0.1 to 20 parts by mass when the total amount of the diene-based rubber is taken as 100 parts by mass. The content of 6PPD in the rubber composition for tire sidewalls according to the first embodiment of the present invention is preferably 0.375 to 7.5 parts by mass when the total amount of the diene-based rubber is taken as 100 parts by mass.

Graphene is a two-dimensional sheet-like substance classified as a nanocarbon material, and has a structure spread with six-membered rings made of sp² carbon. Graphene is easily aggregated or bonded to each other by van der Waals force, and in the present invention, graphene alone or powdery graphene powder in which two or more graphenes are aggregated or bonded is used. From the viewpoint of solving the problems, the graphene used in the rubber composition for tire sidewalls according to the first embodiment of the present invention preferably has a BET specific surface area of 550 to 850 m²/g, more preferably 650 to 750 m²/g as measured by BET method. The content of the graphene powder in the rubber composition for tire sidewalls according to the first embodiment of the present invention is preferably 0.375 to 7.5 parts by mass when the total amount of the diene-based rubber is taken as 100 parts by mass.

The rubber composition for tire sidewalls according to the first embodiment of the present invention is designed so that when a content of 6PPD and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied. This makes it possible to improve the fracture characteristics of the finally obtained vulcanized rubber while reducing the content of 6PPD. From the viewpoint of solving the problems, it is preferable that 1.5 ≤ X + Y ≤ 5 is satisfied. In addition, X : Y is preferably 1.5 : 2.5 to 2.5 : 1.5.

The rubber composition for tire sidewalls according to the first embodiment of the present invention contains a diene-based rubber, a filler, a vulcanizing agent, an antiaging agent, and a graphene powder. The rubber composition for tire sidewalls according to the first embodiment of the present invention may contain, in addition to the above, zinc oxide, stearic acid, a softener such as wax or oil, a processing aid, and others.

The rubber composition for tire sidewalls according to the first embodiment of the present invention is obtained by kneading not only the diene-based rubber, the filler, the vulcanizing agent, the antiaging agent, and the graphene powder but also zinc oxide, stearic acid, the softener such as wax, the processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as sulfur and a vulcanization accelerator are previously kneaded to prepare a master batch, the remaining components are added to the master batch, and the resultant is further kneaded, a method in which components are added in any order and kneaded, and a method in which all the components are added at the same time and kneaded.

The vulcanized rubber of the rubber composition according to the first embodiment of the present invention can improve the fracture characteristics of the finally obtained vulcanized rubber while reducing the content of 6PPD. Therefore, the vulcanized rubber of the rubber composition according to the first embodiment of the present invention is particularly useful for a sidewall portion of a pneumatic tire requiring durability.

The rubber composition for tire treads according to the second embodiment of the present invention contains a diene-based rubber, a filler, a vulcanizing agent, an antiaging agent, and a graphene powder.

The rubber composition according to the second embodiment of the present invention contains a diene-based rubber. Examples of the diene-based rubber include, but are not limited to, natural rubber (NR), isoprene rubber (IR), butadiene-based rubber (BR), styrene-butadiene-based rubber (SBR), acrylonitrile-butadiene-based rubber (NBR), chloroprene rubber (CR), a styrene-isoprene copolymer rubber, a butadiene-isoprene copolymer rubber, and a styrene-isoprene-butadiene copolymer rubber. These diene-based rubbers may be used singly or in combination of two or more of them. From the viewpoint of solving the problems, in the rubber composition for tire treads according to the second embodiment of the present invention, the diene-based rubber is preferably at least one selected from the group consisting of natural rubber, isoprene rubber, styrene-butadiene-based rubber, and butadiene-based rubber.

As the filler, for example, carbon black or silica may be contained.

Examples of the carbon black that can be used include carbon blacks usually used in the rubber industry, such as SAF, ISAF, HAF, FEF, and GPF; and conductive carbon blacks such as acetylene black and ketjen black. From the viewpoint of solving the problems, the rubber composition for tire treads according to the second embodiment of the present invention preferably contains, as a filler, carbon black having an iodine adsorption of 75 to 100 g/kg and a DBP absorption of 95 to 130 cm³/100 g. The content of the carbon black in the rubber composition for tire treads according to the second embodiment of the present invention is preferably 5 to 80 parts by mass when a total amount of the diene-based rubber is taken as 100 parts by mass.

Examples of the silica to be used include silicas usually used for rubber reinforcement, such as wet silica, dry silica, sol-gel silica, and surface-treated silica. Among these, wet silica is preferred. The content of the silica in the rubber composition for tire treads according to the second embodiment of the present invention is preferably 1 to 50 parts by mass when the total amount of the diene-based rubber is taken as 100 parts by mass.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Evonik Japan Co., Ltd.), bis(3-triethoxysilylpropyl)disulfide (e.g., "Si75" manufactured by Evonik Japan Co., Ltd.), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane. The content of the silane coupling agent is preferably 2 to 20 mass% when a total amount of silica is taken as 100 mass%.

As the vulcanizing agent, sulfur and a vulcanization accelerator can be suitably used.

The sulfur may be ordinary sulfur for rubber, and sulfur such as powdered sulfur, precipitated sulfur, insoluble sulfur, or highly dispersible sulfur can be used. The content of sulfur in the rubber composition for tire treads according to the second embodiment of the present invention is preferably 0.1 to 10 parts by mass when the total amount of the diene-based rubber is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination. However, from the viewpoint of solving the problems, the rubber composition for tire treads according to the second embodiment of the present invention preferably contains a sulfenamide-based vulcanization accelerator and a guanidine-based vulcanization accelerator as the vulcanization accelerator. The content of the vulcanization accelerator, more preferably the sulfenamide-based vulcanization accelerator and the guanidine-based vulcanization accelerator, in the rubber composition for tire treads according to the second embodiment of the present invention is preferably 0.1 to 4.5 parts by mass when the total amount of the diene-based rubber is taken as 100 parts by mass.

From the viewpoint of solving the problems, the rubber composition for tire treads according to the second embodiment of the present invention contains at least sulfur, a sulfenamide-based vulcanization accelerator and a guanidine-based vulcanization accelerator as the vulcanizing agents, and the content of sulfur is preferably larger than that of the total amount of the sulfenamide-based vulcanization accelerator and the guanidine-based vulcanization accelerator, and the content of sulfur is more preferably 1.1 times or more the content of the vulcanization accelerator. In addition, the content of sulfur is preferably three times or less and more preferably twice or less the content of the vulcanization accelerator.

Examples of the antiaging agent include an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, which are usually used for rubbers. However, the rubber composition for tire treads according to the second embodiment of the present invention contains at least an amine-ketone-based antiaging agent and 6PPD as the antiaging agents. Examples of the amine-ketone-based antiaging agent include a 2,2,4-trimethyl-1,2-dihydroquinoline polymer, 6-ethoxy-1,2-dihydro-2,2,4-trimethylquinoline, and a reaction product of diphenylamine and acetone, and a 2,2,4-trimethyl-1,2-dihydroquinoline polymer is particularly preferable. The content of the amine-ketone-based antiaging agent, more preferably the 2,2,4-trimethyl-1,2-dihydroquinoline polymer, in the rubber composition for tire treads according to the second embodiment of the present invention is preferably 0.1 to 20 parts by mass when the total amount of the diene-based rubber is taken as 100 parts by mass. The content of 6PPD in the rubber composition for tire treads according to the second embodiment of the present invention is preferably 0.375 to 7.5 parts by mass when the total amount of the diene-based rubber is taken as 100 parts by mass.

Graphene is a two-dimensional sheet-like substance classified as a nanocarbon material, and has a structure spread with six-membered rings made of sp² carbon. Graphene is easily aggregated or bonded to each other by van der Waals force, and in the present invention, graphene alone or powdery graphene powder in which two or more graphenes are aggregated or bonded is used. From the viewpoint of solving the problems, the graphene used in the rubber composition for tire treads according to the second embodiment of the present invention preferably has a BET specific surface area of 550 to 850 m²/g, more preferably 650 to 750 m²/g as measured by BET method. The content of the graphene powder in the rubber composition for tire treads according to the second embodiment of the present invention is preferably 0.375 to 7.5 parts by mass when the total amount of the diene-based rubber is taken as 100 parts by mass.

The rubber composition for tire treads according to the second embodiment of the present invention is designed so that when a content of 6PPD and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied. This makes it possible to improve the abrasion resistance of the finally obtained vulcanized rubber while reducing the content of 6PPD. From the viewpoint of solving the problems, it is preferable that 1.5 ≤ X + Y ≤ 5 is satisfied. In addition, X : Y is preferably 1.5 : 2.5 to 2.5 : 1.5.

The rubber composition for tire treads according to the second embodiment of the present invention contains a diene-based rubber, a filler, a vulcanizing agent, an antiaging agent, and a graphene powder. The rubber composition for tire treads according to the second embodiment of the present invention may contain, in addition to the above, zinc oxide, stearic acid, a softener such as wax or oil, a processing aid, and others.

The rubber composition for tire treads according to the second embodiment of the present invention is obtained by kneading not only the diene-based rubber, the filler, the vulcanizing agent, the antiaging agent, and the graphene powder but also zinc oxide, stearic acid, the softener such as wax, the processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as sulfur and a vulcanization accelerator are previously kneaded to prepare a master batch, the remaining components are added to the master batch, and the resultant is further kneaded, a method in which components are added in any order and kneaded, and a method in which all the components are added at the same time and kneaded.

The vulcanized rubber of the rubber composition according to the second embodiment of the present invention can improve the abrasion resistance of the finally obtained vulcanized rubber while reducing the content of 6PPD. Therefore, the vulcanized rubber of the rubber composition according to the second embodiment of the present invention is particularly useful for a tread portion of a pneumatic tire requiring durability.

### Examples

Hereinbelow, the present invention will be more specifically described with reference to examples according to the first embodiment of the present invention.

### (Preparation of rubber composition for tire sidewalls)

A rubber composition for tire sidewalls of each of Examples 1 to 3 and Comparative Examples 1 to 2 was prepared by blending compounding agents with 100 parts by mass of a rubber component in accordance with the formulation shown in Table 1 and kneading the resultant using an ordinary Banbury mixer. The compounding agents shown in Table 1 are as follows.

### (Diene-based rubber)

· Butadiene rubber: trade name "UBEPOL BR150B", manufactured by UBE Corporation
· Natural rubber: RSS#3

### (Filler)

· Carbon black: trade name "SEAST KH", manufactured by Tokai Carbon Co., Ltd., iodine adsorption: 90 g/kg, and DBP absorption: 119 cm³/100 g

### (Graphene powder)

· Graphene powder: trade name "graphene", manufactured by FUJIFILM Wako Pure Chemical Corporation, BET specific surface area: 650 to 750 m²/g

### (Antiaging agent)

· Amine-ketone-based antiaging agent (2,2,4-trimethyl-1,2-dihydroquinoline polymer): trade name "ANTAGE RD", manufactured by Kawaguchi Chemical Industry Co., Ltd.
· 6PPD (N-(1,3-dimethylbutyl)-N'-phenyl-p-phenylenediamine): trade name "NOCRAC 6C", manufactured by OUCHI SHINKO CHEMICAL INDUSTRIAL CO., LTD.

### (Other compounding agents)

· Aroma oil: "PROCESS NC140" manufactured by ENEOS
Zinc oxide: "Zinc Oxide Variety No. 3" manufactured by Mitsui Mining & Smelting Co., Ltd.
· Stearic acid: "LUNAC S-20" manufactured by Kao Corporation
· Wax: "OZOACE 0355" manufactured by NIPPON SEIRO CO., LTD.

### (Vulcanizing agent)

· Sulfur: trade name "Powder Sulfur", manufactured by Tsurumi Chemical Industry Co., ltd.
· vulcanization accelerator (sulfenamide-based vulcanization accelerator): trade name "SOXINOL CZ", manufactured by SUMITOMO CHEMICAL COMPANY, LIMITED

An unvulcanized sample of the rubber composition for tire sidewalls of each of Examples 1 to 3 and Comparative Examples 1 to 2 obtained above was prepared, and then the scorch (processability) was evaluated. Furthermore, each unvulcanized sample was vulcanized at 160°C for 20 minutes to produce a vulcanized rubber, and tensile strength, bending test (fatigue resistance), and 300% tensile stress retention rate were evaluated under the following conditions.

### (Scorch (processability) of rubber composition for tire sidewalls)

A t5 value was measured by a Mooney scorch tester (L-type rotor) based on JIS K6300-1 under conditions of a preheating time of 1 minute and a temperature of 125°C, and expressed as an index relative to the value of Example 2 regarded as 100. The larger index indicates that scorch is less likely to occur and the scorch (processability) is more excellent.

### (Tensile strength (fracture characteristics) of vulcanized rubber)

The tensile strength of the vulcanized rubber was measured in accordance with JIS K-6251 2017. Specifically, a dumbbell-shaped test piece of dumbbell No. 3 was cut out from the vulcanized rubber, and the tensile force of the dumbbell-shaped test piece was measured with a tensile tester to determine the tensile strength (fracture characteristics). The tensile strength was expressed as an index relative to the tensile strength of Comparative Example 1 regarded as 100. The larger index indicates that the tensile strength is larger.

### (Bending test (fatigue resistance) of vulcanized rubber)

The fatigue resistance was evaluated by measuring the time before a crack of 10 mm was produced in a test piece in accordance with a flex cracking test specified in JIS K6260. The fatigue resistance was expressed as an index relative to the fatigue resistance of Comparative Example 1 regarded as 100. The larger index means that the vulcanized rubber is more excellent in fatigue resistance.

### (300% Tensile stress retention rate of vulcanized rubber)

For the 300% tensile stress retention rate of the vulcanized rubber, a test piece of the vulcanized rubber was subjected to a tensile test in accordance with JIS K6251 to measure 300% tensile stress, and then the test piece of the vulcanized rubber was heated for 96 hours in a gear oven temperature-controlled at 90°C in accordance with JIS K6257, and then subjected to a tensile test in the same manner to measure 300% tensile stress. The retention rate of 300% tensile stress after aging to 300% tensile stress before aging was determined, and the value of Comparative Example 1 as a reference was expressed as an index relative to the value regarded as 100. In general, in the case of the above conditions, when the aging resistance performance is poor, the numerical value of 300% tensile stress after aging increases and the 300% tensile stress retention rate becomes larger than 100, but when the aging resistance performance is excellent, the numerical value of 300% tensile stress after aging increases little and the retention rate becomes close to 100. Therefore, the smaller index means that the aging resistance performance is more excellent.

**[Table 1]**

| | | Comparative Example 1 | Example 1 | Example 2 | Example 3 | Comparative Example 2 |
|---|---|---|---|---|---|---|
| (Formulation) | | | | | | |
| Diene-based rubber | Butadiene rubber | 60 | 60 | 60 | 60 | 60 |
| | Natural rubber | 40 | 40 | 40 | 40 | 40 |
| Filler | Carbon black | 48 | 48 | 48 | 48 | 48 |
| Graphene powder | Graphene powder | - | 1 | 2 | 3 | 4 |
| Antiaging agent | Amine-ketone-based antiaging agent | 2.5 | 2.5 | 2.5 | 2.5 | 2.5 |
| | 6PPD | 4 | 3 | 2 | 1 | - |
| Other compounding agents | Aroma oil | 5 | 5 | 5 | 5 | 5 |
| | Zinc oxide | 2 | 2 | 2 | 2 | 2 |
| | Stearic acid | 2 | 2 | 2 | 2 | 2 |
| | Wax | 2 | 2 | 2 | 2 | 2 |
| Vulcanizing agent | vulcanization accelerator | 0.7 | 0.7 | 0.7 | 0.7 | 0.7 |
| | Sulfur | 1.8 | 1.8 | 1.8 | 1.8 | 1.8 |

| (Evaluation) | | | | | | |
|---|---|---|---|---|---|---|
| Tensile strength | | 100 | 103 | 106 | 104 | 102 |
| Bending test (fatigue resistance) | | 100 | 100 | 100 | 100 | 60 |
| Scorch (processability) | | 90 | 100 | 100 | 106 | 127 |
| 300% Tensile stress retention rate | | 100 | 98 | 98 | 99 | 98 |

From the results in Table 1, it is found that the rubber compositions for tire sidewalls according to Examples 1 to 3 had a high scorch and excellent processability. It is also found that the vulcanized rubbers of the rubber compositions for tire sidewalls according to Examples 1 to 3 improve the tensile strength (fracture characteristics) while maintaining the bending test (fatigue resistance) and the 300% tensile stress retention rate (antiaging performance).

Hereinbelow, the present invention will be more specifically described with reference to examples according to the second embodiment of the present invention.

### (Preparation of rubber compositions for tire treads)

A rubber composition for tire treads of each of Examples 4 to 6 and Comparative Examples 3 to 4 was prepared by blending compounding agents with 100 parts by mass of a rubber component in accordance with the formulation shown in Table 2 and kneading the resultant using an ordinary Banbury mixer. The compounding agents shown in Table 2 are as follows.

### (Diene-based rubber)

· Styrene-butadiene rubber: trade name "ESBR1502", manufactured by ENEOS Materials Corporation
· Butadiene rubber: trade name "UBEPOL BR150B", manufactured by UBE Corporation
· Natural rubber: RSS#3

### (Filler)

· Carbon black: trade name "SEAST 7HM", manufactured by Tokai Carbon Co., Ltd., iodine adsorption: 120 g/kg, and DBP absorption: 125 cm³/100 g

### (Graphene powder)

· Graphene powder: trade name "graphene powder", manufactured by FUJIFILM Wako Pure Chemical Corporation, BET specific surface area: 650 to 750 m²/g

### (Antiaging agent)

· Amine-ketone-based antiaging agent (2,2,4-trimethyl-1,2-dihydroquinoline polymer): trade name "ANTAGE RD", manufactured by Kawaguchi Chemical Industry Co., Ltd.
· 6PPD (N-(1,3-dimethylbutyl)-N'-phenyl-p-phenylenediamine): trade name "NOCRAC 6C", manufactured by OUCHI SHINKO CHEMICAL INDUSTRIAL CO., LTD.

### (Other compounding agents)

· Aroma oil: trade name "PROCESS NC140", manufactured by ENEOS Corporation
· Zinc oxide: trade name "Zinc oxide grade 3", manufactured by MITSUI MINING & SMELTING CO., LTD.
· Stearic acid: trade name "LUNAC S-20", manufactured by Kao Corporation
· Wax: trade name "OZOACE 0355", manufactured by NIPPON SEIRO CO., LTD.

### (Vulcanizing agent)

· Sulfur: trade name "Powder Sulfur", manufactured by Tsurumi Chemical Industry Co., ltd.
· vulcanization accelerator 1 (guanidine-based vulcanization accelerator): trade name "SOXINOL D", manufactured by SUMITOMO CHEMICAL COMPANY, LIMITED
· vulcanization accelerator 2 (sulfenamide-based vulcanization accelerator): trade name "SOXINOL CZ", manufactured by SUMITOMO CHEMICAL COMPANY, LIMITED

An unvulcanized sample of a rubber composition for tire treads of each of Examples 4 to 6 and Comparative Examples 3 to 4 obtained above was prepared, and then the scorch (processability) was evaluated. Furthermore, each unvulcanized sample was vulcanized at 160°C for 20 minutes to produce a vulcanized rubber, and abrasion resistance, rebound resilience, and 300% tensile stress retention rate were evaluated under the following conditions.

### (Scorch (processability) of rubber composition for tire sidewalls)

A t5 value was measured by a Mooney scorch tester (L-type rotor) based on JIS K6300-1 under conditions of a preheating time of 1 minute and a temperature of 125°C, and expressed as an index relative to the value of Example 5 regarded as 100. The larger index indicates that scorch is less likely to occur and the scorch (processability) is more excellent.

### (Abrasion resistance of vulcanized rubber)

Abrasion loss was measured in accordance with JIS K6264 using a Lambourn abrasion tester under conditions of a load of 40 N and a slip ratio of 30%, and abrasion resistance was expressed as an index determined relative to the reciprocal of the abrasion loss of Comparative Example 3 regarded as 100. The larger index indicates that abrasion resistance is more excellent.

### (Rebound resilience of vulcanized rubber)

The rebound resilience of the vulcanized rubber was measured in accordance with JIS K6255 under the condition of 23°C using a pendulum type tester, and the rebound resilience coefficient (%) was expressed as an index relative to the rebound resilience coefficient in Comparative Example 3 regarded as 100. The larger index means that the rebound resilience is higher and rolling resistance performance is more excellent.

**[Table 2]**

| | | Comparative Example 3 | Example 4 | Example 5 | Example 6 | Comparative Example 4 |
|---|---|---|---|---|---|---|
| (Formula tion) | | | | | | |
| Diene-based rubber | Styrene-butadiene rubber | 48 | 48 | 48 | 48 | 48 |
| | Butadiene rubber | 34 | 34 | 34 | 34 | 34 |
| | Natural rubber | 18 | 18 | 18 | 18 | 18 |
| Filler | Carbon black | 72 | 72 | 72 | 72 | 72 |
| Other compounding agents | Aroma oil | 24 | 24 | 24 | 24 | 24 |
| | Zinc oxide | 2 | 2 | 2 | 2 | 2 |
| | Stearic acid | 2 | 2 | 2 | 2 | 2 |
| | Wax | 2 | 2 | 2 | 2 | 2 |
| Antiaging agent | Amine-ketone-based antiaging agent | 0.4 | 0.4 | 0.4 | 0.4 | 0.4 |
| | 6PPD | 1.6 | 1.2 | 0.8 | 0.4 | - |
| Graphene powder | Graphene powder | - | 0.4 | 0.8 | 1.2 | 1.6 |
| Vulcanizing agent | vulcanization accelerator 1 | 0.4 | 0.4 | 0.4 | 0.4 | 0.4 |
| | vulcanization accelerator 2 | 1.2 | 1.2 | 1.2 | 1.2 | 1.2 |
| | Sulfur | 1.8 | 1.8 | 1.8 | 1.8 | 1.8 |

| (Evaluation) | | | | | | |
|---|---|---|---|---|---|---|
| abrasion resistance | | 100 | 109 | 112 | 110 | 103 |
| Scorch (processability) | | 93 | 100 | 100 | 103 | 107 |
| Rebound resilience | | 100 | 101 | 100 | 100 | 97 |
| 300% Tensile stress retention rate | | 100 | 99 | 100 | 99 | 99 |

From the results in Table 2, it is found that the rubber compositions for tire treads according to Examples 4 to 6 had a high scorch and excellent processability. It is also found that the vulcanized rubbers of the rubber compositions for tire treads according to Examples 4 to 6 improve the abrasion resistance while maintaining the rebound resilience and the 300% tensile stress retention rate (antiaging performance).

## Claims

1. A rubber composition for tire sidewalls comprising a diene-based rubber, a filler, a vulcanizing agent, an antiaging agent, and a graphene powder, wherein
the antiaging agent contains at least an amine-ketone-based antiaging agent and N-(1,3-dimethylbutyl)-N'-phenyl-p-phenylenediamine, and
when a content of N-(1,3-dimethylbutyl)-N'-phenyl-p-phenylenediamine and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied.

2. The rubber composition for tire sidewalls according to claim 1, wherein the diene-based rubber is at least one selected from the group consisting of natural rubber, isoprene rubber, styrene-butadiene-based rubber, and butadiene-based rubber.

3. The rubber composition for tire sidewalls according to claim 1 or 2, wherein the filler is carbon black having an iodine adsorption of 75 to 100 g/kg and a DBP absorption of 95 to 130 cm³/100 g.

4. The rubber composition for tire sidewalls according to any one of claims 1 to 3, wherein the vulcanizing agent contains at least sulfur and a sulfenamide-based vulcanization accelerator, and a content of sulfur is higher than that of the sulfenamide-based vulcanization accelerator.

5. The rubber composition for tire sidewalls according to any one of claims 1 to 4, wherein the amine-ketone-based antiaging agent is a 2,2,4-trimethyl-1,2-dihydroquinoline polymer.

6. A pneumatic tire comprising a vulcanized rubber of the rubber composition for tire sidewalls according to any one of claims 1 to 5 in at least a sidewall portion.

7. A rubber composition for tire treads comprising a diene-based rubber, a filler, a vulcanizing agent, an antiaging agent, and a graphene powder, wherein
the antiaging agent contains at least an amine-ketone-based antiaging agent and N-(1,3-dimethylbutyl)-N'-phenyl-p-phenylenediamine, and
when a content of N-(1,3-dimethylbutyl)-N'-phenyl-p-phenylenediamine and a content of the graphene powder per 100 parts by mass of a total amount of the diene-based rubber are respectively defined as X and Y, 1.5 ≤ X + Y ≤ 10, and X : Y is 1 : 3 to 3 : 1 are satisfied.

8. The rubber composition for tire treads according to claim 7, wherein the diene-based rubber is at least one selected from the group consisting of natural rubber, isoprene rubber, styrene-butadiene-based rubber, and butadiene-based rubber.

9. The rubber composition for tire treads according to claim 7 or 8, wherein the filler is carbon black having an iodine adsorption of 105 to 135 g/kg and a DBP absorption of 115 to 135 cm³/100 g.

10. The rubber composition for tire treads according to any one of claims 7 to 9, wherein the vulcanizing agent contains at least sulfur, a sulfenamide-based vulcanization accelerator and a guanidine-based vulcanization accelerator, and a content of sulfur is higher than that of the total amount of the sulfenamide-based vulcanization accelerator and the guanidine-based vulcanization accelerator.

11. The rubber composition for tire treads according to any one of claims 7 to 10, wherein the amine-ketone-based antiaging agent is a 2,2,4-trimethyl-1,2-dihydroquinoline polymer.

12. A pneumatic tire comprising a vulcanized rubber of the rubber composition for tire treads according to any one of claims 7 to 11 in at least a tread portion.

13. A pneumatic tire comprising a vulcanized rubber of the rubber composition for tire treads according to any one of claims 7 to 11 in at least a surface of a tread portion.
